# EUROPEAN PATENT SPECIFICATION

(11) **EP 0 875 711 B1**
(45) Date of publication and mention of the grant of the patent: **04.10.2000**
(21) Application number: 98105457.0
(22) Date of filing: 26.03.1998
(51) Int. Cl.: F16L 33/22

(54) **Quick-release coupling means for connecting hoses having different diameters**
Schnellkupplungsmittel zum Anschliessen von Schläuchen mit unterschiedlichen Durchmessern
Moyens de raccord rapide pour des tuyaux flexibles ayant des diamètres différents

(30) Priority: 29.04.1997 IT PN970022
(43) Date of publication of application: 04.11.1998
(73) Proprietor: UNIFLEX UTILTIME S.p.A., I-33086 Montereale Valcellina (Pordenone) (IT)
(72) Inventor: Borghese, Alladino, 33086 Montereale Valcellina, Pordenone (IT); Magris, Erme, 33086 Montereale Valcellina, Pordenone (IT)
(74) Representative: Giugni, Valter

(56) References cited:
- GB-A- 1 281 904
- NL-A- 7 117 124

## Description

The present invention refers to quick-release coupling means for connecting flexible hoses, in particular such hoses made of plastic material, which enable hoses to be connected that may be even appreciably different in their diameter size and/or wall thickness.

A prior-art connector means of such a kind, which is disclosed in the patent specification GB 1 281 904, comprises a coupling spigot formed by an externally threaded body and a frusto-conical end portion with a ribbed outer surface for insertion into the end portion of a hose, an elastic element engaging the outer surface of said hose, an an outer rigid clamping ring that screws on the spigot body, thereby clamping said elastic element, the hose and the spigot firmly together. Such a type of coupling means ensures an effective clamping of the end portion of the flexible hose.

A further prior-art connector arrangement (known from the disclosure in GB 2 119 465) represents an improvement of the above cited solution, since it allows for a wider variation in the size of the hoses that can be connected, thereby doing away with the drawback of hoses with a larger diameter size being constricted to an excessive extent. This connector is characterized in that only an elastic ring needs to be inserted between the coupling spigot and the rigid clamping ring nut when a hose with a largest-possible diameter is to be connected, while two or more such elastic rings are inserted in series when hoses with smaller diameters have to be connected. This solution appears to be more effective than the previous one, but it still is scarcely rational. As a matter of fact, the use of a plurality of elastic rings brings about not only an excessive usage of materials along with an aggravation in the functional and construction complexity of the connector, but also the drawback of the rings getting possibly lost when not used in the assembly, so that they must be appropriately stored.

It therefore is a purpose of the present invention to provide a coupling means for the connection of flexible hoses, which enables hoses having different diameter and/or wall thickness sizes to be connected , while doing away with the limitations and the drawbacks of the above mentioned prior-art coupling means. In particular, the new hose coupling means must be free of any loose-type elastic rings, ie. elastic means that are provided separately from the other parts making up the coupling means for insertion thereonto when the need arises.

According to the present invention, this aim is reached in a coupling means which comprises again a coupling spigot onto which the end portion of the hose to be connected is inserted, an elastic ring engaging the outer surface of the hose to be connected, and a rigid ring nut for clamping the leastic ring against the outer surface of the hose, as this usually occurs in prior-art coupling means. The new coupling means according to the present invention, however, is mainly characterized in that the elastic ring is attached to the coupling means through an axially sliding engagement, so as to be able to take different positions as required in view of enabling hoses of diffferent sizes to be inserted between the coupling spigot and the elastic ring.

The features and advantages of the invention will be more readily understood from the description that is given below by way of non-limiting example with reference to the accompanying drawings, in which:
- Figure 1 is a longitudinal-section view of a coupling means according to the present invention, with a hose of larger diameter and wall thickness inserted thereinto;
- Figure 2 is a longitudinal-section view of the coupling means shown in Figure 1, with a hose of smaller diameter and wall thickness inserted thereinto;
- Figure 3 is a perspective view of a detail of the coupling means according to the present invention.

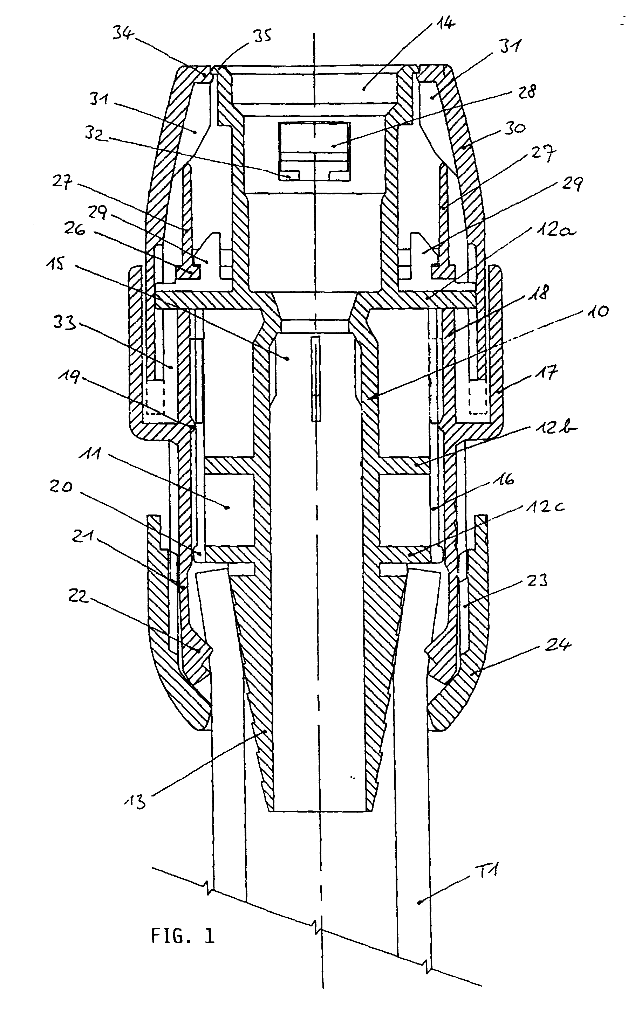

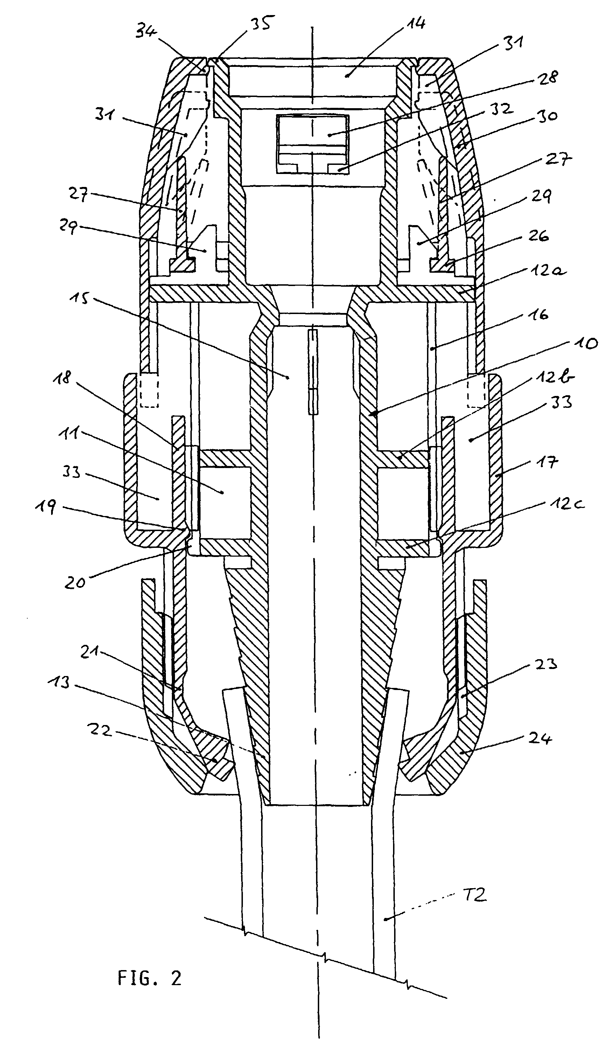

When particularly considering the Figures 1 and 2, the coupling means according to the present invention can be noticed to include a substantially cylindrical coupling spigot 10 provided with longitudinal ribs 11 and transverse ribs 12a, 12b, 12c and extending into a tail portion 13 that is susbtantially frusto-conical in its shape and has a ribbed outer surface. At its opposite end portion with respect to said tail portion 13, the coupling spigot 10 is provided with an appropriately shaped mouthpiece 14 for the insertion of the male portion (not shown) of the coupling means. Inside the coupling spigot 10 a receptacle 15 can be provided to possibly accomodate, if required, an automatic shut-off or sealing valve of any per sè known type (not shown here) to prevent water or fluid from leaking when the coupling means is separated.

According to the present invention, on the coupling spigot 10, and more precisely on the ridges of the longitudinal ribs 11, there is provided a thread 16 which is engaged by the corresponding inner thread of a ring nut 17. The ring nut 17 can therefore be screwed on the coupling spigot 10 in such a manner as to be displaced continuously, ie. stepless, between two extreme fully screwed-on and slightly screwed-on positions corresponding to condition in which a hose T1 with a large diameter and wall thickness is inserted in the coupling means (see Figure 1) and a condition in which a hose T2 with a small diameter and wall thickness is on the contrary inserted thereinto (see Figure 2), respectively. Said two extreme displacement positions for the ring nut 17 are defined by the contact of the inner annular edge 18 of the ring nut 17 with the farthermost annular rib 12a with respect to the tail portion 13 of the coupling spigot 10 and, respectively, the contact of an annular projection 19 on the inner surface of the ring nut 17 with an annular stop edge 20 provided in correspondence of the annular rib 12c close to the tail portion 13 of the coupling spigot 10.

From the ring nut 17 there are extending longitudinal elastic claws 21, the end portions of which are provided with serrations 22 to engage the outer surface of the hose (T1, T2). On the outer surface of the ring nut 17 there is further provided a thread 23 which is engaged by the corresponding inner thread of a rigid ring nut 24. When this rigid ring nut 24 is screwed on, this causes the claws 21 to be compressed against the hose (T1, T2) and, as a result, the same hose to be clamped on to the tail portion 13 of the coupling spigot 10.

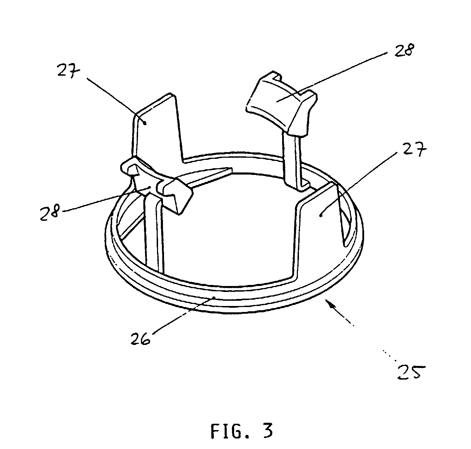

In order to complete the coupling, on the opposite side of the coupling spigot 10 with respect to the tail portion 13 thereof an elastic clasping element 25 (Figure 3) is mounted, said clasping means bein formed by a ring 26 from which a pair of mutually opposing plane arms 27 and a pair of mutually opposing arms 28 serrated at their end portions extend longitudinally with respect to the axis of the coupling means. Both said plane arms 27 and said serrated arms 28 are capable of being deformed elastically. The elastic clasping element 25 is fastened on to the coupling spigot 10 by allowing the ring 26 to snap-fit into engagement with at least two elastic teeth 29 provided on the coupling spigot 10.

The elastic element 25 co-operates with a ring 30 to enable the male portion of the coupling means to be released. To this purpose, the ring 30 is mounted axially slidable on the coupling spigot 10 and is provided on its inner surface with appropriate ribs 31 adapted to interact with the pair of arms 27 of the elastic element 25. Such an interaction is illustrated in Figure 2 with the ribs 31 and the arms 27 represented in dashed lines.

The serrated end portions of the pair of arms 28 are on the contrary normally introduced in corresponding apertures 32 in the body 10 of the coupling means and are capable of bending radially outwards when the male portion of the coupling means is inserted in the body 10.

The ring 30 is capable of sliding axially on the coupling spigot 10, as guided by the rib 12a, and can slide into a receptacle 33 provided on the outer surface of the coupling spigot 10, as this is shown in Figures 1 and 2. After its assembly, the ring 30 remains attached to the coupling spigot 10 owing to the mutual engagement of an annular projection 34 with an annular projection 35 provided at the end portions of the ring 30 and the spigot 10, respectively.

The way in which the coupling means according to the present invention works is most simple.

When the need arises for a large-sized hose (Figure 1) to be connected, the ring nut 17 must be screwed fully down on the coupling spigot 10, ie. until the inner extremity of said ring nut is brought to abut against the annular rib 12a from the side where the mouthpiece for the attachment of the male portion of the coupling means lies. Furthermore, the clamping ring nut 24 must be loosened, ie. unscrewed, in order to enable the end portion of the hose T1 to be inserted on to the tail portion 13 of the spigot 10. Owing to the fact that the hose T1 is large-diameter one, the end portion thereof must be inserted fully down, ie. until it abuts against the radial rib 12c close to the tail portion 13. In order to clamp the hose in the coupling means, all it takes is to tighten the ring nut 24, thereby causing the claws 21 to be compressed with their serrations 22 against the wall of the hose T1 and, as a result, thesame hose to be compressed against the tail portion 13 of the spigot 10.

Similarly, when a small-sized hose T2 (Figure 2) must on the contrary be connected, the ring nut 17 must be unscrewed with respect to the spigot 10 up to the point at which the annular projection 19 thereof is brought to abut against the limiting projection 20 of the same spigot. The clamping ring nut 24 is then loosened, the end portion of the hose T2 is inserted and the ring nut 24 is tightened again, as in the above considered case.

It will be readily appreciated that the ring nut 17, due to its being screwed on the spigot 10, can be displaced in a continuous manner, ie. steplessly, along the same spigot, and is therefore able to take any intermediate position between the extreme ones, thereby enabling hoses with even appreciably varying diameter and/or wall thickness sizes to be connected thereto. Just as an indication, the coupling means according to the present invention can be assumed as to be able to accomodate hoses with a diameter ranging from 12.7 to 19.05 mm (ie. from ½-in. to ¾-in), and corresponding wall thicknesses, for connection thereto.

The coupling means according to the present invention therefore fully reaches the main aim of allowing for a wide adaptability thereof in the connection of hoses of widely varying size. Furthermore, such a coupling means has a compact construction and is very convenient to use, since it has no separate or separable parts depending on the actual size of the hose to be connected.

It will be appreciated that the above described example of embodiment may be the subject of a number of modifications and variants without departing from the scope of the present invention, so as this is defined by the appended claims. For instance, the axial sliding movement of the elastic ring nut 17 on the coupling spigot 10 can also be implemented through protruding elements of the same ring nut engagingcorrespondingly shaped recesses or similar provisions on the spigot, wherein the ring nut will in this case be able to take discrete positions with respect to the spigot, instead of being displaceable in a continuous, ie. stepless manner between two extreme positions on the same spigot.

## Claims

1. Quick-release coupling means for the connection of flexible hoses (T1, T2) of different diameter and/or wall thickness, comprising a coupling spigot (10) provided with a frusto-conical tail portion (13) onto which the end portion of the hose (T1, T2) to be connected is inserted, an inner elastic ring nut (17) adapted to engage the outer surface of the hose, and a rigid outer ring nut (24) to clamp the elastic ring nut (17) against the outer surface of the hose (T1, T2) and the latter against the coupling spigot (10), **characterized in that** the inner elastic ring nut (17) is attached to the coupling spigot (10) through an axially sliding engagement between two extreme positions, wherein it is able to take any intermediate position between said extreme positions, so that hoses having different diameters and/or wall thickness sizes can be connected.

2. Coupling means according to claim 1, **characterized in that** said axially sliding engagement between the inner ring nut (17) and the coupling spigot (10) is a screw-type continuous engagement.

3. Coupling means according to claim 1 or 2, **characterized in that** the two extreme position of the ring nut (17) on the coupling spigot (10) are defined by the inner annular edge (18) of the ring nut (17) engaging a transversally extending rib (12a) of the coupling spigot (10) on the one side and an annular projection (19) on the inner surface of the ring nut (17) engaging an annular limit provision (20) on the outer surface of the coupling spigot (10) on the other side.

4. Coupling means according to claim 1, **characterized in that** the outer rigid ring nut (24) is attached to the inner elastic ring nut (17) through a screw-like engagement therewith.

## Patentansprüche

1. Schnelllöse-Kupplungseinrichtung zum Anschließen flexibler Schläuche (T1, T2) mit unterschiedlichem Durchmesser und/oder unterschiedlicher Wanddicke, die einen Kupplungszapfen (10), der mit einem kegelstumpfförmigen hinteren Abschnitt (13) versehen ist, auf den der Endabschnitt des anzuschließenden Schlauchs (T1, T2) aufgeführt wird, eine innere, elastische Ringmutter (17), die mit der Außenfläche des Schlauchs in Eingriff kommt, sowie eine starre äußere Ringmutter (24) umfasst, die die elastische Ringmutter (17) an die Außenfläche des Schlauchs (T1, T2) und letzteren an den Kupplungszapfen (10) klemmt, **dadurch gekennzeichnet**, dass die innere, elastische Ringmutter (17) an dem Kupplungszapfen (10) über einen axial gleitenden Eingriff zwischen zwei äußeren Positionen angebracht wird, wobei sie jede beliebige Position zwischen den äußeren Positionen einnehmen kann, so dass Schläuche mit unterschiedlichem Durchmesser und/oder Wanddicke angeschlossen werden können.

2. Kupplungseinrichtung nach Anspruch 1, **dadurch gekennzeichnet,** dass der axiale Gleiteingriff zwischen der inneren Ringmutter (17) und dem Kupplungszapfen (10) ein stufenloser Schraub-Eingriff ist.

3. Kupplungseinrichtung nach Anspruch 1 oder 2, **dadurch gekennzeichnet,** dass die beiden äußeren Positionen der Ringmutter (17) auf dem Kupplungszapfen (10) durch den Eingriff des inneren ringförmigen Randes (18) der Ringmutter (17) mit einer sich quer erstreckenden Rippe (12a) des Kupplungszapfens (10) auf der einen Seite und den Eingriff eines ringförmigen Vorsprungs (19) an der Innenfläche der Ringmutter (17) mit einer ringförmigen Begrenzungsstruktur (20) an der Außenfläche des Kupplungszapfens (10) an der anderen Seite definiert werden.

4. Kupplungseinrichtung nach Anspruch 1, **dadurch gekennzeichnet,** dass die äußere starre Ringmutter (24) an der inneren, elastischen Ringmutter (17) über einen schraubenartigen Eingriff damit angebracht ist.

## Revendications

1. Moyens de raccord rapide pour la connexion de tuyaux flexibles (T1, T2) de diamètre et/ou d'épaisseur de paroi différents, comprenant un bout de raccord (10) comportant une extrémité tronconique (13) sur laquelle la partie d'extrémité du tuyau (T1, T2) à connecter est insérée, un écrou annulaire élastique intérieur (17) adapté pour venir en prise sur la surface extérieure du tuyau, et un écrou annulaire extérieur rigide (24) pour serrer l'écrou annulaire élastique (17) contre la surface extérieure du tuyau (T1, T2) et ce dernier contre le bout de raccord (10), caractérisés en ce que l'écrou annulaire élastique intérieur (17) est fixé au bout de raccord (10) par une prise à glissement axial entre deux positions extrêmes, où ils peuvent prendre n'importe quelle position intermédiaire entre lesdites positions extrêmes, de sorte que des tuyaux ayant des dimensions de diamètre et/ou d'épaisseur de paroi différentes puissent être connectés.

2. Moyens de raccord selon la revendication 1, caractérisés en ce que ladite prise par glissement axial entre l'écrou annulaire intérieur (17) et le bout de raccord (10) est une prise continue du type par vis.

3. Moyens de raccord selon la revendication 1 ou 2, caractérisés en ce que les deux positions extrêmes de l'écrou annulaire (17) sur le bout de raccord (10) sont définies par le bord annulaire intérieur (18) de l'écrou annulaire (17) venant en prise avec une nervure (12a) du bout de raccord (10), s'étendant transversalement sur l'un des côtés, et une saillie annulaire (19) sur la surface intérieure de l'écrou annulaire (17) en venant en prise avec une saillie limite annulaire (20) sur la surface extérieure du bout de raccord (10) sur l'autre côté.

4. Moyens de raccord selon la revendication 1, caractérisés en ce que l'écrou annulaire rigide extérieur (24) est fixé à l'écrou annulaire élastique intérieur (17) par une prise du type par vis avec celui-ci.
